# EUROPÄISCHE PATENTSCHRIFT

(11) **EP 1 022 174 B1**
(45) Veröffentlichungstag und Bekanntmachung des Hinweises auf die Patenterteilung: **26.10.2005**
(21) Anmeldenummer: 99126023.3
(22) Anmeldetag: 24.12.1999
(51) Int. Cl.: B60J 7/00, B60Q 3/02, G09F 13/18

(54) **Schiebehimmel in einem Fahrzeug**
Sliding screen in the roof of a vehicle
Store coulissante dans le toit d'un véhicule

(30) Priorität: 21.01.1999 DE 19902244
(43) Veröffentlichungstag der Anmeldung: 26.07.2000
(73) Patentinhaber: DaimlerChrysler AG, 70567 Stuttgart (DE)
(72) Erfinder: Wilms, Bernd, 71088 Holzgerlingen (DE)

(56) Entgegenhaltungen:
- EP-A- 0 448 807
- EP-A- 0 676 311
- EP-A- 0 801 373
- DE-A- 3 602 819
- DE-C- 3 706 141
- US-A- 4 852 938
- US-A- 5 507 547
- PATENT ABSTRACTS OF JAPAN vol. 1996, no. 11, 29. November 1996 (1996-11-29) -& JP 08 192693 A (KANTO AUTO WORKS LTD), 30. Juli 1996 (1996-07-30)

## Beschreibung

Die Erfindung betrifft einen Dachhimmel mit einem transparenten Dachelement gemäß den gattungsbildenden Merkmalen des Anspruchs 1.

Ein Dachhimmel mit einem transparenten Dachelement, das mit einem Schiebehimmel abgedeckt werden kann ist aus der DE 19511066 C1 bekannt. Das Fahrzeugdach weist ein transparentes Dachelement und einen Schiebehimmel zum selektiven Öffnen und Verschließen des Bereichs unterhalb des transparenten Dachelementes auf. Das transparente Dachelement kann beispielsweise ein Schiebedach oder ein Glasdach sein. Zum Verschließen des Bereiches unterhalb des transparenten Dachelementes bedeckt der Schiebehimmel die gesamte Fläche des Dachelementes und verhindert das Eindringen von Lichtstrahlen in den Innenraum des Fahrzeuges. So wird starke Sonneneinstrahlung in den Fahrzeuginnenraum verhindert.
Zur Beleuchtung des Innenraumes des Fahrzeuges bei Dunkelheit wird im Fahrzeug zusätzlich eine Flächenleuchte angeordnet. Flächenleuchten haben durch die Beleuchtung einer großen Fläche eine geringere Neigung zum Wurf von Schatten als punktuelle Leuchten. Eine spezielle Ausführung einer Flächenleuchte ist aus der US 5,079,675 bekannt. Die Flächenleuchte hat eine gleichmäßige Lichtverteilung über eine Fläche und dient zur Beleuchtung eines Objektes oder eines Raumes. Die Flächenleuchte weist mindestens eine Scheibe auf, wobei an wenigstens einer Seite der Scheibe eine Lichtquelle angeordnet ist, um welche ein Reflektionskörper angeordnet ist, der das Licht in die Scheibe reflektiert. In der Scheibe sind geneigte Reflektionsflächen vorgesehen, die parallel einfallendes Licht um einen 90° Winkel reflektieren, so dass das Licht in eine Vorzugsrichtung gerichtet abgestrahlt wird. Auf der gegenüberliegenden Seite der Vorzugsrichtung der transparenten Scheibe ist eine Reflektionsscheibe angeordnet, die das hierauf fallende Licht in die gewünschte abzustrahlende Richtung reflektiert, so dass eine gleichmäßige und intensive Lichtabstrahlung in eine Richtung erreicht wird.
In der JP 08192693 ist ein gattungsgemäßer Dachhimmel mit einem transparenten Glaselement, ein sogenanntes Glasdach für ein Fahrzeug mit einem im Innenraum angeordneten Schiebehimmel zur Abschattung des Glaselementes beschrieben, wobei auf der Innenseite des Schiebehimmels eine Innenraumleuchte angeordnet ist, die durch Bewegen des Schiebehimmels mitbewegt wird.

Bei dieser Art eines Dachhimmels ist von Nachteil, dass bei Verschließen des transparenten Dachelementes mit einem Schiebehimmel zur Vermeidung von Lichteinfall in das Kraftfahrzeug oder zur Beschattung des Innenraumes, ein großer Bereich der Innenseite des Fahrzeugdaches mit dem Schiebehimmel überdeckt ist. Es ist wenig Platz um eine Leuchte, insbesondere eine Flächenleuchte am Dachhimmel zusätzlich unterzubringen.

Die Aufgabe der Erfindung ist einen Dachhimmel mit einem transparenten Dachelement so zu gestalten, dass sowohl bei Tag als auch bei Nacht eine optimale Beleuchtung des Fahrzeuginnenraumes erfolgt.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Ausgestaltungen liegt darin, dass durch die Anordnung der Flächenleuchte am Schiebehimmel kein zusätzlicher Platzbedarf am Dachhimmel zur separaten Anordnung der Flächenleuchte nötigt ist. Durch Einschieben des Schiebehimmels in einen in der Dachkarosserie vorgesehenen Aufnahmeraum kann die Fläche der Flächenleuchte reduziert werden. Dadurch kann die gewünschte Lichtmenge zur Beleuchtung des Innenraumes eingestellt werden.

Die Erfindung wird anhand eines Ausführungsbeispieles in Verbindung mit einer Figurenbeschreibung näher erläutert. Es zeigt
- Fig. 1: einen schematischen Ausschnitt eines Dachhimmels,
- Fig. 2: eine Seitenansicht des Ausschnittes eines Dachhimmels sowie
- Fig. 3: eine Seitenansicht wie in Fig. 2 jedoch zusätzlich mit einer erfindungsgemäß vorgesehenen schaltbaren Scheibe.

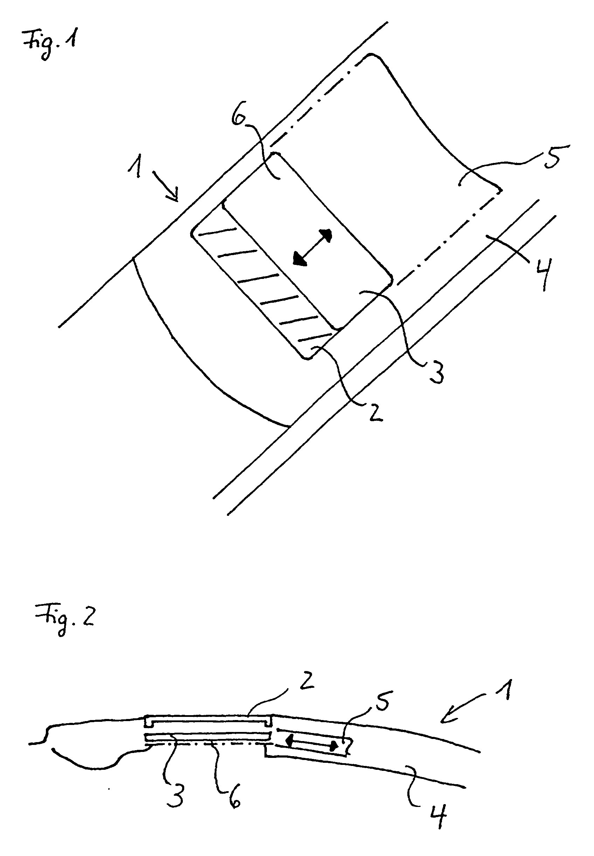

In Fig. 1 ist ein schematischer Ausschnitt eines Dachhimmels 1 dargestellt. Der Dachhimmel 1 weist ein transparentes Dachelement 2 auf, wobei der Bereich unterhalb des transparenten Dachelementes 2 mit einem Schiebehimmel 3 verschlossen werden kann. Das transparente Dachelement 2 ist beispielsweise ein Glasdach oder auch ein Schiebedach aus transparentem Material. Der Schiebehimmel 3 wird in Pfeilrichtung in einen in der Dachkarosserie 4 vorgesehenen Aufnahmeraum 5 eingeschoben. Dies erfolgt manuell oder mittels eines elektrischen Antriebes, der über ein im Innenraum des Fahrzeuges angeordnetes Bedienelement gesteuert werden kann. Am Schiebehimmel 3 ist an der Seite zum Fahrzeuginnenraum eine Flächenleuchte 6 angeordnet, die einen großen Teil der Fläche oder die gesamte Fläche des Schiebehimmels 3 überdeckt. Die Flächenleuchte 6 ist aus einer Elektrolumineszenzfolie oder aus einer Leuchte wie in der US 5,079,675 beschrieben gebildet. Jede beliebige Ausführung einer Flächenleuchte ist aber möglich. Bei Bewegen des Schiebehimmels 3 bewegt sich die Flächenleuchte 6 mit. Bei Einschieben des Schiebehimmels 3 in den in der Dachkarosserie 4 vorgesehenen Aufnahmeraum 5, man spricht hier von Öffnen des Schiebehimmels 3, wird die Flächenleuchte 6 mit in den Aufnahmeraum 5 eingeschoben. Bedeckt der Schiebehimmel 3 das gesamte transparente Dachelement 2 ist die gesamte Fläche der Flächenleuchte 6 zur Beleuchtung des Fahrzeuginnenraumes nutzbar. Das Anschalten der Flächenleuchte 6 erfolgt durch Betätigen eines Schalters, der bevorzugt im Fahrzeuginnenraum für Fahrer oder Beifahrer leicht zugänglich angeordnet ist. Wenn zur Bewegung des Schiebehimmels 3 ein elektrischer Antrieb vorgesehen ist, kann ein Steuerungsmechanismus vorgesehen sein, der bei Öffnen des Fahrzeuges automatisch den Schiebehimmel 3 schließt und die Flächenleuchte 6 anschaltet. Es ist im Fahrzeug ein geeignetes Bedienelement vorgesehen, mit welchem der Schiebehimmel 3 gezielt in eine gewünschte Position in Pfeilrichtung bewegt werden kann. Die Flächenleuchte 6 kann dabei erst in Betrieb genommen werden, wenn der Schiebehimmel 3 ganz geschlossen ist oder aber der Schiebehimmel 3 kann teilweise geöffnet sein, wenn die Flächenleuchte 6 in Betrieb ist. Diese zweite Ausführung bietet den Vorteil, daß die Leuchtstärke der Flächenleuchte 6 variiert werden kann. Bei etwas geöffnetem Schiebehimmel 3 ist die Leuchtstärke dann geringer als bei vollständig geschlossenem Schiebehimmel 3. Zur Variation der Leuchtstärke ist die Flächenleuchte 6 auch dimmbar.

Fig. 2 zeigt eine Seitenansicht des in Fig. 1 dargestellten Ausschnittes eines Dachhimmels 1. In der Dachkarosserie 4 ist ein transparentes Dachelement 2 angeordnet, das auf der Fahrzeuginnenseite mit einem Schiebehimmel 3 verschlossen werden kann. Bei starker Sonneneinstrahlung wird durch die Abschattung mit dem Schiebehimmel 3 eine zu starke Aufheizung des Fahrzeuginnenraumes vermieden. Bei Öffnen des Schiebehimmels 3 wird der Schiebehimmel 3 in einen in der Dachkarosserie 4 dafür vorgesehenen Aufnahmeraum 5 eingeschoben. An dem Schiebehimmel 3 ist auf der Fahrzeuginnenseite eine Flächenleuchte 6 angeordnet, die wenn sie eingeschaltet ist den Fahrzeuginnenraum ausleuchtet. Die Flächenleuchte 6 erstreckt sich über einen großen Teil der Fläche des Schiebehimmels 3. Bei Bewegung des Schiebehimmels 3 bewegt sich die Flächenleuchte 6 entsprechend mit und wird bei Öffnen des Schiebehimmels 3 mit in den Aufnahmeraum 5 eingeschoben.

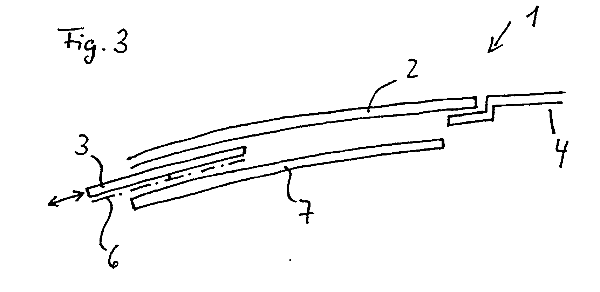

Fig. 3 zeigt eine Seitenansicht wie in Fig. 2, wobei erfindungsgemäß zusätzlich unterhalb des Schiebehimmels 3 eine schaltbare Scheibe 7 angeordnet ist. Die schaltbare Scheibe 7 ist unabhängig vom Schiebehimmel 3 angeordnet, so daß der Schiebehimmel 3 mit der Flächenleuchte 6 unabhängig von der schaltbaren Scheibe 7 bewegt werden kann. Die schaltbare Scheibe 7 ist zwischen transparent und opak schaltbar. Die Umschaltung zwischen diesen Zuständen wird beispielsweise über ein Bedienelement im Fahrzeuginnenraum getätigt. Bei geöffnetem Schiebehimmel 3 und bei transparenter Scheibe 7 kann Licht durch den Dachhimmel 1 fallen, als wäre nur das transparente Dachelement 2 vorhanden. Bei geöffnetem Schiebehimmel 3 und bei opaker Scheibe 7 wird das durch das transparente Dachelement 2 fallende Licht von der opaken Scheibe 7 teilweise zurückreflektiert. Das Licht gelangt stark gestreut in den Fahzeuginnenraum. Bei geschlossenem Schiebehimmel 3 mit angeschalteter Flächenleuchte 6 und einer transparenten Scheibe 7 wird das Licht der Flächenleuchte 6 durch die Scheibe 7 nicht verändert. Bei geschlossenem Schiebehimmel 3 mit angeschalteter Flächenleuchte 6 und einer opaken Scheibe 7 gelangt das Licht der Flächenleuchte 6 stark gestreut in den Fahrzeuginnenraum.

## Patentansprüche

1. Dachhimmel (1) eines Fahrzeuges mit einem transparenten Dachelement (2), wobei der Bereich unterhalb des transparenten Dachelementes (2) mit einem Schiebehimmel (3) verschließbar ist, wobei am Schiebehimmel (3) eine Leuchte (6) angeordnet ist,
**dadurch gekennzeichnet, dass** als Leuchte eine Flächenleuchte (6) vorgesehen ist und
**dass** unterhalb des Schiebehimmels (3) eine der Flächenleuchte (6) zugeordnete schaltbare Scheibe (7) angeordnet ist.

2. Dachhimmel (1) nach Anspruch 1,
**dadurch gekennzeichnet,**
**dass** die schaltbare Scheibe (7) unabhängig vom Schiebehimmel (7) angeordnet ist.

3. Dachhimmel (1) nach den Ansprüchen 1 und 2,
**dadurch gekennzeichnet,**
**dass** die schaltbare Scheibe (7) zwischen transparent und opak schaltbar ist.

## Claims

1. Roof liner (1) of a vehide with a transparent roof element (2), wherein the region below the transparent roof element (2) can be dosed with a sliding roof liner (3), a light fitting (6) being arranged on the sliding roof liner (3), **characterised in that** a planar light fitting (6) is provided as the light fitting and **in that** a switchable panel (7) associated with the planar light fitting (6) is arranged below the sliding roof liner (3).

2. Roof liner (1) according to claim 1, **characterised in that** the switchable panel (7) is arranged independently of the sliding roof liner (7).

3. Roof liner (1) according to claims 1 and 2, **characterised in that** the switchable panel (7) can be switched between transparent and opaque.

## Revendications

1. Store de toit (1) d'un véhicule automobile avec un élément de toit transparent (2), dans lequel la zone en dessous de l'élément de toit transparent (2) peut être obturée par un store coulissant (3), un éclairage (6) étant placé dans le store coulissant (3), **caractérisé en ce qu'**un éclairage plat (6) est prévu comme éclairage et une vitre commutable (7) associée à l'éclairage plat (6) est installée sous le store coulissant (3).

2. Store de toit (1) selon la revendication 1, **caractérisé en ce que** la vitre commutable (7) est installée indépendamment du store coulissant (3).

3. Store de toit (1) selon les revendications 1 et 2, **caractérisé en ce que** la vitre commutable (7) est commutable entre un état transparent et un état opaque.
